**Europäisches Patentamt**

(19) **European Patent Office**

**Office européen des brevets**

(11) Veröffentlichungsnummer: **0 071 070**
**B1**

(12) **EUROPÄISCHE PATENTSCHRIFT**

(45) Veröffentlichungstag der Patentschrift:
**19.09.84**

(21) Anmeldenummer: **82106240.3**

(22) Anmeldetag: **13.07.82**

(51) Int. Cl.³: **C 09 D 3/80,** C 08 F 212/08,
C 08 F 220/12, C 08 L 25/14,
C 08 L 33/06

(54) Verfahren zur Herstellung einer wässrigen Copolymerisat-Dispersion und Verwendung der Dispersion.

(30) Priorität: **16.07.81 DE 3128062**

(43) Veröffentlichungstag der Anmeldung:
**09.02.83 Patentblatt 83/6**

(45) Bekanntmachung des Hinweises auf die Patenterteilung:
**19.09.84 Patentblatt 84/38**

(84) Benannte Vertragsstaaten:
**AT BE CH DE FR GB IT LI LU NL SE**

(56) Entgegenhaltungen:
**DE - B - 2 626 900**

(73) Patentinhaber: **HOECHST AKTIENGESELLSCHAFT,
Postfach 80 03 20, D-6230 Frankfurt am Main 80 (DE)**

(72) Erfinder: **Mondt, Josef, Dr., Altkönigstrasse 24d,
D-6240 Königstein/Taunus (DE)**
Erfinder: **Wirth, Thaddäus, Dr., Kemeler Weg 6,
D-6209 Heidenrod-Wisper (DE)**

0 071 070

## Beschreibung

Die Erfindung bezieht sich auf ein Verfahren zur Herstellung einer wäßrigen Copolymerisat-Dispersion und die Verwendung dieser Dispersion für die Herstellung von durch Wärme vernetzbaren (wärmehärtbaren) Überzügen.

Für die Herstellung von wärmehärtbaren Überzügen besitzen wäßrige Copolymerisat-Dispersionen besonderes Interesse, weil sie nicht brennbar sind und physiologisch weniger bedenklich als Lösemittel enthaltende Überzugsmittel. Außerdem entfällt die Wiedergewinnung von teurem Lösemittel. Neben den Eigenschaften, die man von allen Kunststoff-Dispersionen fordert, wie gutes Fließverhalten, gute Verarbeitbarkeit, Koagulatfreiheit, Lager- und Temperaturbeständigkeit, ist bei Copolymerisat-Dispersionen, die als Bindemittel zur Herstellung von wärmehärtbaren Überzügen verwendet werden sollen, noch besonders wichtig, daß man gut verlaufende und gut haftende Überzugsmittel erhält, die schon bei Raumtemperatur trocknen und keine Risse oder sonstigen Filmstörungen aufweisen. Die daraus entstandenen Überzüge sollen dann durch Wärmebehandlung härtbar sein. Zu diesem Zweck enthalten die den Dispersionen zugrundeliegenden Copolymerisate reaktive Gruppen im Molekül, welche mit reaktiven Gruppen bestimmter Harze, insbesondere Aminoplast-Harze, reagieren, so daß das Bindemittel vernetzt.

Neben den Vorteilen, wie beispielsweise niedrige Viskosität bei hohem Feststoffgehalt, hohes Molekulargewicht und Abwesenheit flüchtiger Lösemittel, besitzen wäßrige Copolymerisat-Dispersionen für wärmehärtbare Überzüge auch Nachteile, wie beispielsweise mangelnde Pigmentbenetzung, mangelnde Haftung auf dem Untergrund, schlechtes Verlaufen der mittels dieser Dispersion hergestellten Überzugsmittel und unzureichende Elastizität der eingebrannten Filme, vor allem aber geringer Glanz und geringe Wasserbeständigkeit.

Bei einer häufig in der Lacktechnik angewandten Prüfmethode wird der auf metallische Untergründe aufgespritzte und in einem Umlufttrockenschrank eingebrannte Lackfilm mit einem feuchten Wattebausch belastet und die Zeit gemessen, die notwendig ist, um den Lackfilm so anzuquellen und zu erweichen, daß er durch einfache mechanische Belastung (z. B. Ankratzen mit einem Spatel) zerstört werden kann. Von einem guten Einbrennlack erwartet man nach dieser Methode Wasserbeständigkeitswerte, die in der Größenordnung von 800 Stunden (etwa 1 Monat) liegen.

Es ist bekannt, wärmehärtbaren Überzugsmitteln, die als Bindemittel wäßrige Dispersionen auf Basis von Acrylpolymeren enthalten, zur Verbesserung des Verlaufens Verlaufshilfsmittel (»Zusammenfließmittel«, Koalesziermittel) zuzusetzen (vgl. Deutsche Offenlegungsschriften 2 211 169, 2 252 065, 2 416 446 und 2 505 829 = US-Patentschriften 3 962 167, 4 020 219, 4 132 688, 3 904 795 und 4 137 205). Diese Mittel unterstützen das Zusammenfließen des Überzugs während des Trocknens an der Luft vor dem Einbrennen. Zur Anwendung kommen langkettige Alkohole, Dimethylformamid, Tributylphosphat, Polyethylen- oder Polypropylenglykole, 2-Butoxyethanolacetat, Diacetonalkohol, 3,5,5-Trimethylcyclohexen-2-on-1, Caprolactam, Additionsprodukte von mehrwertigen Alkoholen mit $C_2$- bis $C_4$-Epoxiden oder gelöste und verträgliche Copolymerisatharze.

Der Nachteil der genannten Zusätze liegt darin, daß außer Glanz und Verlauf die anderen anwendungstechnischen Eigenschaften der Filme durch die hydrophilen und niedrigmolekularen Zusätze negativ beeinflußt werden. Vor allem leidet die Wasserfestigkeit und die Chemikalienresistenz der eingebrannten Überzüge.

Speziell zur Verbesserung der Wasserbeständigkeit von Überzügen, die unter Verwendung von Dispersionen von wärmehärtbaren Copolymerisaten hergestellt wurden, sollen gemäß der Deutschen Offenlegungsschrift 2 709 308 bei der Herstellung der Dispersionen Alkali- oder Erdalkalimetallionen, z. B. aus Initiatoren und Emulgatoren, durch Ammoniumionen ersetzt werden. Man erreicht aber auch mit solchen Dispersionen nur Wasserfestigkeiten von etwa 120 Stunden.

Aufgabe der Erfindung ist die Schaffung einer wäßrigen Dispersion eines Copolymerisats, welches mit einem Aminoplastharz in der Wärme vernetzbar ist und zu gut verlaufenden, fehlerfreien und insbesondere wasserfesten Überzügen auf metallischen Untergründen führt.

Es wurde gefunden, daß bei einer bestimmten Auswahl der Monomeren und ihrer Mengenverhältnisse aus Styrol, Acryl- oder Methacrylsäureestern, Vinylestern, hydroxylgruppenhaltigen Monomeren, Acryl- und/oder Methacrylsäure, gegebenenfalls Acryl- und/oder Methacrylamid und Additionsverbindungen von Glycidylestern von verzweigten Monocarbonsäuren mit ungesättigten Carbonsäuren durch Polymerisation in Gegenwart eines anionischen Emulgators sowie eines radikalischen Initiators und gegebenenfalls eines nichtionischen Emulgators wäßrige Copolymerisat-Dispersionen herstellbar sind, welche in Kombination mit Aminoplastharzen wärmehärtbare Überzüge mit ausgezeichneten Eigenschaften ergeben. Diese Überzüge ergeben hochelastische, wetterbeständige, wasserfeste, gut haftende und fehlerfreie Oberflächenbeschichtungen auf metallischen Untergründen.

Gegenstand der Erfindung ist somit ein Verfahren zur Herstellung einer wäßrigen Dispersion eines Copolymerisats, welches mit einem Aminoplastharz in der Wärme vernetzbar ist und welches durch Copolymerisation von mindestens zwei Monomeren aus der Gruppe Styrol, Acrylsäureester, Methacrylsäureester, Vinylester, monoolefinisch ungesättigte Monomere mit Hydroxylgruppen, Acrylsäure, Methacrylsäure, ungesättigte Säureamide und weitere funktionelle Comonomere in wäßriger Phase in Gegenwart eines radikalbildenden Initiators und eines Emulgators hergestellt wird, dadurch gekenn-

2

zeichnet, daß ein Gemisch aus

30 bis 60 Gewichtsteilen Styrol und/oder Methylmethacrylat,

20 bis 50 Gewichtsteilen eines Acrylsäureesters oder eines Methacrylsäureesters, dessen Homopolymerisat eine Glastemperatur $T_G$ unterhalb $+50°$ C aufweist, oder eines Gemisches dieser Ester,

5 bis 30 Gewichtsteilen eines Vinylesters einer verzweigten, gesättigten Monocarbonsäure, die Seitenketten mit 8 bis 12 Kohlenstoffatomen und die Carboxylgruppe an einem tertiären Kohlenstoffatom besitzt,

5 bis 15 Gewichtsteilen eines Hydroxylalkylesters einer monoolefinisch ungesättigten Monocarbonsäure,

0,5 bis 15 Gewichtsteilen einer $\alpha,\beta$-ungesättigten Monocarbonsäure und/oder ungesättigten Dicarbonsäure, und

0,1 bis 8 Gewichtsteilen eines Additionsproduktes eines Glycidylesters einer verzweigten Monocarbonsäure mit einer ungesättigten Mono- und/oder Dicarbonsäure

copolymerisiert wird.

Gegenstand der Erfindung ist weiterhin die Verwendung der auf diese Weise hergestellten Copolymerisat-Dispersion für die Herstellung von durch Wärme vernetzbaren Überzügen.

Als Monomere, die als hartmachende Komponente dienen, werden 30 bis 60, vorzugsweise 35 bis 55 Gewichtsteile Styrol und/oder Methylmethacrylat eingesetzt. Vorzugsweise wird Methylmethacrylat eingesetzt.

Als weichmachende Komponente enthält das einzusetzende Monomerengemisch 20 bis 50, vorzugsweise 25 bis 45 Gewichtsteile eines Acrylsäureesters oder Methacrylsäureesters, dessen Homopolymerisat eine Glastemperatur $T_G$ unterhalb $+50°$C aufweist, oder Gemische dieser Ester. Beispiele für diese Monomeren sind Ethylacrylat, Propylacrylat, Isopropylacrylat, die Acryl- und Methacrylsäureester von n- und i-Butylalkohol, 2-Ethylhexylalkohol und Decylalkohol.

Weiterhin enthält das einzusetzende Monomerengemisch 5 bis 30, vorzugsweise 8 bis 26 Gewichtsteile eines Vinylesters einer verzweigten, gesättigten Monocarbonsäure, die Seitenketten mit 8 bis 12 Kohlenstoffatomen und die Carboxylgruppe an einem tertiären Kohlenstoffatom besitzt. Derartige Carbonsäuren können durch die Synthese nach Koch aus Olefinen, Kohlenmonoxid und Wasser gewonnen werden. Bevorzugt wird der Vinylester einer verzweigten, gesättigten Monocarbonsäure mit insgesamt 10 Kohlenstoffatomen, deren Carboxylgruppe sich an einem tertiären Kohlenstoffatom befindet, verwendet.

Um eine ausreichende Reaktivität des aus der Dispersion herzustellenden Überzugsgemisches zu erreichen, werden außerdem als Monomere eingesetzt 5 bis 15, vorzugsweise 6 bis 12 Gewichtsteile eines Hydroxyalkylesters einer monoolefinisch ungesättigten Monocarbonsäure, z. B. Hydroxyethylacrylat, 2-Hydroxypropylacrylat, Hydroxyethylmethacrylat, Hydroxypropylmethacrylat, 4-Hydroxybutylmethacrylat, Glycerinmonomethacrylat, Trimethylolpropanmonoacrylat, Umsetzungsprodukte aus Hydroxylmethacrylat mit 2—8 mol Ethylenoxid, Neopentylglykolmonomethacrylat und Triethylenglykolmonoacrylat.

Der Einbau von ungesättigten Monocarbonsäuren in das Copolymerisat erhöht die Stabilität der Dispersion bei der Herstellung, Lagerung und Anwendung. Besonders bei Industrielacken treten bei der Herstellung und Applikation der Beschichtungsmittel hohe Scherkräfte auf. Aus diesem Grunde enthält das einzusetzende Monomerengemisch 0,5 bis 10, vorzugsweise 1 bis 8 Gewichtsteile einer $\alpha,\beta$-ungesättigten Monocarbonsäure und/oder einer ungesättigten Dicarbonsäure. Geeignete Säuren sind Acrylsäure, Methacrylsäure, Crotonsäure, Maleinsäure, Fumarsäure und Itaconsäure. Bevorzugt verwendet werden Acrylsäure und/oder Methacrylsäure.

Weiterhin enthält das einzusetzende Monomerengemisch 0,1 bis 8, vorzugsweise 1 bis 6 Gewichtsteile eines Additionsproduktes eines Glycidylesters einer verzweigten Monocarbonsäure mit einer ungesättigten Mono- und/oder Dicarbonsäure. Als verzweigte Monocarbonsäure kommt eine Säure infrage, die ein Gemisch aus Carbonsäuren mit 9 bis 11 Kohlenstoffatomen darstellt. Beispiele für geeignete ungesättigte Mono- und Dicarbonsäuren sind Acryl-, Methacryl-, Croton- und Maleinsäure. Bevorzugt ist die Verwendung von Acryl- und/oder Methacrylsäure.

Schließlich enthält das einzusetzende Monomerengemisch noch vorteilhafterweise zusätzlich 0,1 bis 5, vorzugsweise 1 bis 4 Gewichtsteile eines ungesättigten Säureamids, beispielsweise Acrylamid oder Methacrylamid oder ein Gemisch von ungesättigten Säureamiden. Diese Monomeren tragen sowohl zur Stabilisierung der Copolymerisat-Dispersion als auch zur Vernetzung des mittels dieser Dispersion hergestellten Überzugsmittels beim Einbrennen bei.

Die Auswahl der Art und Menge der Monomeren erfolgt nach den Anforderungen, die an den eingebrannten Überzug hinsichtlich Wasser-, Wetter-, Lösemittel- und Chemikalienbeständigkeit gestellt werden. Die Zusammensetzung des Monomerengemisches ist im Rahmen der vorgenannten Mengenbereiche derart festzulegen, daß eine Copolymerisat-Dispersion entsteht, deren minimale Filmbildetemperatur (MFT) im Bereich von 0 bis 70° C, vorzugsweise 10 bis 60° C liegt.

Das erfindungsgemäße Verfahren wird in Gegenwart eines Emulgators durchgeführt. Dieser Emul-

3

gator ist vorzugsweise ein anionischer Emulgator; statt eines einzelnen Emulgators kann auch ein Gemisch verschiedener Emulgatoren eingesetzt werden. Beispiele für anionische Emulgatoren sind die Alkalisalze von Schwefelsäurehalbestern von Alkylphenolen oder Alkoholen, ferner die Schwefelsäurehalbester von oxethylierten Alkylphenolen oder oxethylierten Alkoholen oder auch ein Alkyl- oder Arylsulfonat, vorzugsweise die Alkalisalze des Schwefelsäurehalbesters eines mit 4—5 Mol Ethylenoxid umgesetzten Nonylphenols, ferner Natriumlaurylsulfat, Natriumlaurylethoxylatsulfat und sekundäre Natriumalkansulfonate, deren Kohlenstoffkette 8—20 Kohlenstoffatome enthält. Die Menge des anionischen Emulgators beträgt 0,1—5,0, vorzugsweise 0,5—3,0 Gew.-%, bezogen auf die Monomeren. Ferner kann zur Erhöhung der Stabilität der wäßrigen Copolymerisat-Dispersion zusätzlich ein nichtionischer Emulgator vom Typ eines ethoxylierten Alkylphenols oder Fettalkohols, z. B. ein Additionsprodukt aus einem mol Nonylphenol und 4—30 mol Ethylenoxid im Gemisch mit einem anionischen Emulgator eingesetzt werden, und zwar ebenfalls in einer Menge von 0,1 bis 5,0, vorzugsweise 0,5—3,0 Gew.-%, bezogen auf die Monomeren.

Weiterhin kann als Emulgator ein Fluortensid verwendet werden. Unter dem Begriff Fluortensid werden oberflächenaktive Verbindungen verstanden, die Perfluoralkylreste mit 2 bis 20 Kohlenstoffatomen oder Perfluoraralkylreste mit 8 bis 30 Kohlenstoffatomen enthalten. Beispiele für derartige Verbindungen sind Perfluoralkylsulfonsäuren, Perfluoraralkylsulfonsäuren, langkettige Perfluorcarbonsäuren, Perfluoralkanphosphonsäuren, Perfluoralkanphosphinsäuren, die Salze dieser Säuren, Perfluoralkylsulfate und Perfluoraralkylsulfate.

Das erfindungsgemäße Polymerisationsverfahren wird als Emulsionspolymerisation in einem wäßrigen Medium in den bekannten Apparaturen, beispielsweise in einem Rührkessel mit Heiz- und Kühlvorrichtung, durchgeführt. Die Zugabe der Monomeren kann in der Weise erfolgen, daß eine Lösung aus dem gesamten Wasser, dem Emulgator und einem Teil des Initiators vorgelegt wird und das Monomerengemisch und der Rest des Initiators bei der Polymerisationstemperatur langsam zugegeben werden. Es ist jedoch auch möglich, einen Teil des Wassers und des Emulgators vorzulegen und aus dem Rest des Wassers und des Emulgators und aus den Monomeren eine Voremulsion herzustellen, die in das Polymerisationsmilieu eingeführt wird. Die Polymerisation wird vorzugsweise in der Weise durchgeführt, daß man 30—50 Gew.-% des Wassers mit 10—15 Gew.-% des Emulgators oder gegebenenfalls Emulgatorgemisches vorlegt, und aus den Monomeren, dem restlichen Teil des Wassers und den verbleibenden Emulgatoren eine Voremulsion herstellt, die über 1—3 Stunden der erwärmten Vorlage zudosiert wird.

Das erfindungsgemäße Verfahren wird in Gegenwart eines radikalbildenden Initiators durchgeführt, insbesondere einer Peroxidverbindung oder einer aliphatischen Azoverbindung. Der Initiator ist wasserlöslich oder monomerlöslich. Vorzugsweise wird ein wasserlöslicher Initiator verwendet.

Als Initiatoren eignen sich die üblichen anorganischen Perverbindungen, insbesondere Ammoniumsalze oder Alkalisalze der Peroxydischwefelsäure und der Peroxydiphosphorsäure, z. B. Natriumperoxydisulfat, Kaliumperoxydisulfat, Ammoniumperoxydisulfat, Ammoniumperoxydiphosphat, Natriumperoxydiphosphat und Kaliumperoxydiphosphat. Es können auch wasserunlösliche Initiatoren verwendet werden, die in den Monomeren löslich sind, z. B. Benzoylperoxid, Cumolhydroperoxid, Di-tert.-Butylperoxid, Butylhydroperoxid und Persiopivalat, die auch zum Teil in Kombination mit Reduktionsmitteln wie Natriumdisulfit, Hydrazin, Hydroxylamin und mit katalytischen Mengen an Beschleunigern wie Eisen-, Kobalt, Cer- und Vanadylsalzen eingesetzt werden können.

Vorzugsweise werden die wasserlöslichen Initatoren eingesetzt. Auch eine Kombination von wasserlöslichen und organischen Peroxiden kann verwendet werden. In besonderen Fällen empfiehlt es sich, dem Polymerisationsansatz eine Puffersubstanz, z. B. Natriumhydrogencarbonat, zuzusetzen, um den pH-Wert im Bereich von 3—5 zu halten.

Zur Regelung des Molekulargewichts wird eine Verbindung verwendet, die bei der Polymerisation von Acrylatmonomeren als Kettenabbrecher brauchbar ist. Neben perhalogenierten Kohlenwasserstoffen kann jede Verbindung der Formel R—SH, in der R einen Alkylrest, Arylrest oder Aralkylrest, vorzugsweise einen Alkylrest mit 2—18 Kohlenstoffatomen bedeutet, verwendet werden. Beispiele für derartige Verbindungen sind Ethylmercaptan, n-Butylmercaptan, n-Octylmercaptan, Laurylmercaptan und t-Dodecylmercaptan. Der Regler wird in einer Menge von 0,01—5,0, vorzugsweise von 0,5—3,0 Gew.-%, bezogen auf die Summe der Monomeren, eingesetzt. Wird für bestimmte Einsatzgebiete ein besonders hohes Molekulargewicht verlangt, wird die Emulsionspolymerisation ohne Regler durchgeführt.

Die Polymerisationstemperatur liegt im Bereich von 20 bis 100°C, vorzugsweise 40 bis 90°C.

Nach Beendigung des Zulaufs des Monomerengemisches wird der gesamte Ansatz noch für 1—3 Stunden bei 60—90°C, vorzugsweise bei 70—85°C, gerührt. Anschließend wird die Dispersion mit einem tertiären Amin, beispielsweise Triethylamin, Diethanolmonomethylamin, Triethanolamin, Dimethylisopropylhydroxymethylamin, Dimethylaminoethanol, Dimethylaminopropanol oder Diethylaminoethanol, auf einen pH-Wert von 7,5—9,5 eingestellt. Besonders durch die Verwendung von Diethanolmonomethylamin, Dimethylaminoethanol und Dimethylaminopropanol erhält man eine besonders gute Pigmentbenetzung der Dispersion und damit gute lacktechnische Eigenschaften.

Die durch das erfindungsgemäße Verfahren erhaltenen Copolymerisate haben Glasübergangstemperaturen ($T_G$) im Bereich von 0 bis +60°C, bevorzugt von +10 bis +50°C. Das erfindungsgemäße

4

Verfahren führt zu Copolymerisaten, die eine mittlere Teilchengröße (Partikeldurchmesser) von 0,05 bis 0,2 μm aufweisen, bevorzugt von 0,06 bis 0,15 μm.

Die erfindungsgemäß erhaltene wäßrige Copolymerisat-Dispersion besitzt einen Feststoffgehalt von 20 bis 60 Gew.-%, vorzugsweise 30 bis 50 Gew.-%, und ergibt im Gemisch mit einem wasserlöslichen und/oder wasserdispergierbaren Aminoplastharz wärmehärtbare Überzüge, die hervorragend verlaufen und besonders elastische, haftfeste, korrosions- und witterungsstabile, insbesondere wasserfeste, Grundierungen, Füller, Decklacke und Einschichtlackierungen ergeben.

Unter Aminoplastharzen versteht man hitzehärtbare Reaktionsprodukte aus Aldehyden, vorzugsweise Formaldehyd, mit polyfunktionellen Aminen, beispielsweise Harnstoff sowie Triazinen wie Melamin und Benzoguanamin. Diese Harze sind häufig verethert, beispielsweise mit Methanol, um die Löslichkeit in Wasser zu fördern. Ein häufig verwendetes Melaminharz ist Hexamethoxymethylmelamin, das in Wasser klare Lösungen ergibt und deshalb besonders gut dosiert werden kann und zu lagerstabilen Bindemittelgemischen führt.

Außerdem können herkömmliche alkylierte, beispielsweise butylierte, Melamin-Formaldehyd-Harze verwendet werden, vorausgesetzt, daß sie den Erfordernissen der Wasserlöslichkeit, der Verträglichkeit oder der Dispergierbarkeit in dem komplett formulierten Beschichtungssystem genügen.

Die erfindungsgemäß erhaltene wäßrige Copolymerisat-Dispersion wird in der Art mit dem Aminoplastharz abgemischt, daß (bezogen auf Gesamtharzfeststoff) 5—40 Gew.-% Aminoplastharz, bevorzugt 10—30 Gew.-%, in dem Bindemittelgemisch enthalten sind.

Die Copolymerisat-Dispersion kann mit einem Aminoplastharz zu Klarlacken oder zu pigmentierten Lacken formuliert werden. Man geht bei der Lackherstellung häufig so vor, daß man Pigmente und/ oder Füllstoffe mit üblichen Lackhilfsmitteln, gegebenenfalls Härtungskatalysatoren und gegebenenfalls Neutralisationsmitteln zu einer Pigmentpaste anrührt, die dann mit dem Bindemittelsystem vermischt wird. Vielfach kann aber auch das Aminoplastharz als Anrührharz (Pigmentbenetzungsmittel) bei der Herstellung der Pigmentpaste dienen.

Als Pigmente und/oder Füllstoffe können alle in der Lackindustrie üblichen Produkte eingesetzt werden, vorausgesetzt, sie sind unter alkalischen Bedingungen ausreichend stabil, damit das gebrauchsfertige Überzugsmittel mehrere Monate lagerfähig ist. Das Pigment kann in bei der Herstellung von pigmentierten, wäßrigen Dispersionsfarben üblichen Weise dem Ansatz zugesetzt werden. Bei Lackformulierungen mit wäßrigen Copolymerisat-Dispersionen wird der Glanz häufig verbessert, wenn das Pigment in das Aminoplastharz eingemahlen wird und dann die wäßrige Pigmentpaste in die wäßrige Copolymerisat-Dispersion eingemischt wird. Ein typisches Pigment zur Herstellung von Weißlacken ist beispielsweise Titandioxid.

Außer den Aminoplastharzen können als Pigmentbenetzungsmittel verschiedene Produkte eingesetzt werden, meistens kommen wasserverdünnbare oder wasserlösliche natürliche oder synthetische Polymerisate zum Einsatz, deren Wasseraffinität durch eine größere Zahl von hydrophilen Molekülbestandteilen erreicht wird. Gemäß der Deutschen Offenlegungsschrift 2 505 829 werden z. B. hochsiedende Addukte mit einem Molekulargewicht von 300—6000 aus aliphatischen, mehrwertigen Alkoholen und Epoxiden eingesetzt.

Bei der Formulierung von pigmentierten Beschichtungszusammensetzungen ist es vielfach notwendig, auch sogenannte Dispergiermittel einzusetzen. Dabei ist die Wirkung des Dispergiermittels auf die Eigenschaften des fertigen Filmes zu berücksichtigen, z. B. auf die Wasserfestigkeit. Als Dispergiermittel werden z. B. die Ammoniumsalze oder Alkalisalze von polymeren Carbonsäuren wie Polyacrylsäure oder Polymethacrylsäure eingesetzt. Die Menge der verwendeten Dispergiermittel ist abhängig von der Art und der Menge der eingesetzten Pigmente und der Bindemittel.

Ein besonderer Vorteil der erfindungsgemäß hergestellten Copolymerisat-Dispersion ist die gute Verträglichkeit mit einem sogenannten Pigmentbenetzungsharz, welches als besonders effektives Pigmentbenetzungsmittel eingesetzt wird und das bevorzugt eine ähnliche Monomerzusammensetzung hat wie das als Bindemittel eingesetzte Copolymerisat. Dieses Pigmentbenetzungsharz ist ein wasserverdünnbares Copolymerisat auf der Basis von Acryl- oder Methacrylsäureestern und hydrophilen Monomeren, das nach bekannten Methoden durch radikalische Copolymerisation in einem mit Wasser verdünnbaren organischen Lösemittel hergestellt wird. Nach der Copolymerisation wird das Pigmentbenetzungsharz mit einem tertiären Amin neutralisiert. Das Pigmentbenetzungsharz liegt in der Anwendungsform in einer klaren, wäßrigen Lösung vor, und eignet sich zur Herstellung von stabilen Pigmentpräparationen mit anorganischen Pigmenten. Durch die Verwendung eines Pigmentbenetzungsharzes wird häufig der Glanz und der Verlauf der Einbrennlacke verbessert.

Als Pigmentbenetzungsmittel sind ferner brauchbar handelsübliche, wasserverdünnbare oder wasserlösliche natürliche oder synthetisierte Polymerisate, deren Wasseraffinität durch eine größere Zahl von hydrophilen Molekülbestandteilen erreicht wird. Beispiele für derartige Produkte sind Polyether wie Polyethylenoxide und Polypropylenoxide.

Das fertig formulierte Überzugsmittel kann zur Erhöhung der Lagerstabilität zusätzlich noch mit einem tertiären Amin versetzt werden. Der bevorzugte pH-Bereich liegt bei 7—9.

Zur Senkung der Einbrenntemperatur kann den Überzugsmitteln auch noch ein Härtungskatalysator zugemischt werden. Ein häufig verwendeter Katalysator ist Paratoluolsulfonsäure.

Das Überzugsmittel auf der Basis der erfindungsgemäß erhaltenen Copolymerisat-Dispersion kann

5

auf eine Vielzahl von Untergründen aufgebracht werden, die allerdings gegen die Einbrenntemperatur stabil sein müssen. Aus diesem Grund eignen sich besonders metallische Untergründe, beispielsweise Gegenstände aus Eisen, Stahl, Aluminium, Kupfer, Bronze und Messing. Auch keramische Oberflächen, Glas und Holz können überzogen werden. Dispersionslacke können beispielsweise unter Verwendung von Spritzpistolen, durch Streichen, Rakeln, Walzen oder Eintauchen auf die Untergründe aufgetragen werden. In der Praxis wird der überzogene Gegenstand vorwiegend an der Luft bei Raumtemperatur oder bei nur geringfügig erhöhter Temperatur abgelüftet und getrocknet. Dann wird der Überzug durch »Einbrennen« bei einer Temperatur von $80° - 180°$ C ausgehärtet. Die Überzüge werden in der Regel über einen Zeitraum von $10 - 30$ Minuten eingebrannt. Die Schichtdicken der eingebrannten Beschichtungen liegen im Bereich von 15 bis 80 $\mu$m, vorzugsweise 25 bis 60 $\mu$m.

Eingebrannte Klarlackfilme und pigmentierte Lackfilme auf der Basis der erfindungsgemäß hergestellten Copolymerisat-Dispersion zeichen sich durch unerwartete hohe Wasserfestigkeit aus. Außerdem zeigen diese Lackfilme gute Deckkraft, Glätte, Elastizität, Glanz, Haftung, Wetterbeständigkeit und Vergilbungsresistenz. Die gute chemische Beständigkeit zeigt sich besonders gegenüber Wasser, Lösemitteln, alkalischen und sauren Agenzien. Die Copolymerisat-Dispersion eignet sich sehr gut zur Herstellung von Zweischicht-Metalliclacken. Derartige, mit Hilfe dieser Dispersion formulierte Lacke zeigten im bekannten »Florida-Test« hervorragende Beständigkeit, indem beispielsweise Metallic-Silber-Lacke innerhalb 12 Monaten nur etwa 10% an Glanz verloren.

Die folgenden Beispiele dienen zur näheren Erläuterung der Erfindung. Prozentangaben und Verhältnisangaben beziehen sich jeweils auf das Gewicht, die Mengenangaben bei Lösungen und Dispersionen jeweils auf den Festkörper.

Die Polymerisationsversuche wurden in einem Mehrhalskolben mit Rührer, Thermometer, Tropftrichter und Temperierbad durchgeführt.

Wurde als Regler ein Mercaptan verwendet, so war darauf zu achten, daß das Mercaptan dem Monomerengemisch oder der Voremulsion erst kurz vor Beginn des Zudosierens zugesetzt wurde, weil bei längerem Stehen des mercaptanhaltigen Monomerengemisches oder der Voremulsion eine Gelb- oder Braunfärbung auftrat.

## Beispiel 1

Aus

| | |
|---|---|
| 400 g | Styrol |
| 200 g | Ethylacrylat |
| 200 g | Vinylester einer verzweigten, gesättigten $C_{10}$-Monocarbonsäure mit einer Carboxylgruppe am tert. Kohlenstoffatom |
| 80 g | Hydroxypropylmethacrylat |
| 50 g | Methacrylsäure |
| 20 g | Additionsprodukt eines Glycidylester einer verzweigten $C_{10}$-Carbonsäure und Crotonsäure (1 : 1) |
| 10 g | Methacrylamid |
| 8 g | Natriumlaurylethoxylatsulfat (mit $2 - 6$ mol Ethylenoxid) |
| 10 g | Laurylmercaptan |
| 4 g | Ammoniumperfluoroctylsulfat und |
| 900 g | Wasser |

wurde eine Monomeremulsion hergestellt. Die Emulsion wurde zu einer Lösung von 8 g Natriumlaurylethoxylatsulfat (mit $2 - 6$ mol Ethylenoxid) in 600 g Wasser während 2 Stunden bei $80°$ C zudosiert. Parallel zur Monomeremulsion wurde eine Lösung von 2 g Ammoniumperoxydisulfat in 40 g Wasser zum Ansatz zugegeben. Nach Beendigung des Monomerenzulaufs wurde das Gemisch bei $80°$ C 3 Stunden weiter gerührt. Nach Abkühlen auf Raumtemperatur wurde die Copolymerisat-Dispersion mit einer wäßrigen Dimethylaminoethanollösung auf pH 8,0 eingestellt. Die Copolymerisat-Dispersion hatte einen Feststoffgehalt von 35%. Ihre minimale Filmbildetemperatur lag bei $+16°$ C und die mittels Differentialthermoanalyse (DTA) bestimmte Glasübergangstemperatur des Copolymerisats lag bei $+55°$ C.

## Beispiel 2

Aus

| | |
|---|---|
| 170 g | Styrol |
| 170 g | Methylmethacrylat |
| 170 g | Ethylacrylat |

| | |
|---|---|
| 170 g | Vinylester einer verzweigten, gesättigten $C_{10}$-Monocarbonsäure mit einer Carboxylgruppe am tert. Kohlenstoffatom |
| 70 g | Hydroxypropylmethacrylat |
| 60 g | Methacrylsäure |
| 15 g | Additionsprodukt eines Glycidylesters einer verzweigten gesättigten $C_{10}$-Carbonsäure und Acrylsäure (1 : 1) |
| 10 g | Methacrylamid |
| 12 g | Natriumlaurylethoxylatsulfat (mit 2 – 6 mol Ethylenoxid) |
| 3 g | Natriumperfluoroctylsulfonat |
| 10 g | Laurylmercaptan und |
| 700 g | Wasser |

wurde eine Monomerenemulsion hergestellt und zu einer Lösung von 8 g Natriumlaurylethoxylatsulfat in 500 g Wasser während 2 Stunden bei 80° C zudosiert. Die weitere Verarbeitung war analog Beispiel 1. Man erhielt eine Dispersion mit einem Feststoffgehalt von 38% und einer Glasübergangstemperatur $T_G$ des Copolymerisats von +51°C.

Beispiel 3

Aus

| | |
|---|---|
| 200 g | Styrol |
| 140 g | Methylmethacrylat |
| 160 g | Ethylacrylat |
| 180 g | Vinylester einer verzweigten, gesättigten $C_{10}$-Monocarbonsäure mit einer Carboxylgruppe am tert. Kohlenstoffatom |
| 70 g | Hydroxypropylmethacrylat |
| 60 g | Methacrylsäure |
| 5 g | Additionsprodukt eines Glycidylesters einer verzweigten gesättigten $C_{10}$-Carbonsäure und Acrylsäure (1 : 1) |
| 10 g | Natriumlaurylsulfat |
| 10 g | Laurylmercaptan und |
| 700 g | Wasser |

wurde eine Monomeremulsion hergestellt. Nach den Angaben von Beispiel 1 wurde diese Monomeremulsion zu einer Lösung von 8 g Natriumlaurylsulfat in 550 g Wasser zudosiert und währenddessen mit Ammoniumperoxydisulfat als Initiator die Polymerisation durchgeführt.

Der Feststoffgehalt der Dispersion betrug 38%, die Glasübergangstemperatur $T_G$ des Copolymerisats war +47°C.

Beispiel 4

Aus

| | |
|---|---|
| 200 g | Styrol |
| 200 g | Methylmethacrylat |
| 200 g | Ethylacrylat |
| 180 g | Vinylester einer verzweigten, gesättigten $C_{10}$-Monocarbonsäure mit einer Carboxylgruppe am tert. Kohlenstoffatom |
| 90 g | Hydroxypropylmethacrylat |
| 70 g | Methacrylsäure |
| 15 g | Additionsprodukt eines Glycidylesters einer verzweigten gesättigten $C_{10}$-Carbonsäure und Acrylsäure (1 : 1) |
| 10 g | Natriumlaurylethoxylatsulfat (mit 2 – 6 mol Ethylenoxid) |
| 4 g | Natriumperfluoroctylphosphonat |
| 12 g | Laurylmercaptan und |
| 680 g | Wasser |

wurde eine Monomeremulsion hergestellt, die nach der Vorschrift von Beispiel 1 in einer Lösung von 8 g Natriumlaurylethoxylatsulfat (mit 2 – 6 mol Ethylenoxid) und 550 g Wasser in Gegenwart von Ammoniumperoxydisulfat der Polymerisation zugeführt wurde. Die Copolymerisat-Dispersion hatte einen Feststoffgehalt von 40% und eine minimale Filmbildetemperatur (MFT) von +26°C. Die Glasübergangstemperatur $T_G$ des Copolymerisats war +53°C.

### Anwendungsbeispiel 1

Herstellung einer Weißlackfarbe auf der Basis der Copolymerisat-Dispersion nach Beispiel 1:

A. Pigmentpaste
| 40 g | Hexamethoxymethylmelamin (50% in Wasser) |
| 3,0 g | Natriumpolyacrylat (25% in Wasser) |
| 1,6 g | Additionsprodukt von 1 mol Nonylphenol und 6–10 mol Ethylenoxid |
| 0,6 g | handelsüblicher Entschäumer |
| 10,0 g | Natriumnitrit (5% in Wasser) |
| 160 g | Titandioxid (Rutiltyp) |

B. Bindemittel
| 540 g | Copolymerisat-Dispersion (35%ig) |

Teil A wurde 12 Stunden in einer Kugelmühle dispergiert, dann wurde Teil B zugemischt und der Ansatz erneut für 10 Stunden in der Kugelmühle abgerieben. Der Weißlack wurde mit einer Auslaufzeit (nach DIN 53 211) von 20 Sekunden auf entfettete Stahlbleche aufgespritzt und nach einer Ablüftzeit von 10 min für 30 min bei 160°C eingebrannt.

Die Schichtstärke betrug 35 µm, der Glanzwert (nach DIN 67 530) 88% und der Wasserfestigkeitswert (nach der Wattebauschtestmethode) 1100 Stunden.

### Beispiel 5

Aus

| 92 g | Methylmethacrylat |
| 70 g | Ethylacrylat |
| 25 g | Hydroxypropylmethacrylat |
| 13 g | Acrylsäure |
| 5 g | Di-tert.-Butylperoxid |
| 180 g | Butyldiglykol |
| 5 g | Laurylmercaptan |

wurde durch sechsstündiges Erhitzen auf 120°C ein Pigmentbenetzungsmittel hergestellt, das einen Feststoffgehalt von 51,5% hatte. Die Säurezahl (nach DIN 53 402) betrug 47 und die Hydroxylzahl (nach DIN 53 783) lag bei 50. Mit einer wäßrigen Dimethylaminoethanollösung wurde die Harzlösung auf einen Feststoffgehalt von 45% verdünnt. Die klare, wäßrige Harzlösung wurde in dieser Form als Pigmentbenetzungsmittel eingesetzt.

### Anwendungsbeispiel 2

Herstellung von Weißlackfarben auf der Basis der Copolymerisat-Dispersionen gemäß Beispiel 1, 2, 3 und 4 und dem Pigmentbenetzungsmittel gemäß Beispiel 5:

A. Pigmentpaste
| 20,60 g | Titandioxid (Rutiltyp) |
| 6,25 g | Hexamethoxymethylmelamin |
| 7,80 g | Pigmentbenetzungsmittel (Beispiel 5) |
| 2,20 g | handelsübliches Netzmittel |

B. Bindemittel
| 55,45 g | Copolymerisat-Dispersion gemäß den Beispielen 1, 2, 3 und 4 |
| 9,55 g | Pigmentbenutzungsmittel (Beispiel 5) |
| 0,15 g | handelsüblicher Korrosionsinhibitor |

Gemäß Anwendungsbeispiel 1 wurden Weißlacke hergestellt und im Spritzauftrag auf entfettete Stahlbleche appliziert. Die Weißlackfilme wurden für 30 Minuten bei 150°C im Umlufttrockenschrank eingebrannt. Die Filme waren frei von Kochern und hatten eine Schichtstärke von 40 bis 60 µm. Die Lackfilme zeigten einen guten Glanz und guten Verlauf. Die lacktechnischen Prüfwerte sind in der Tabelle 1 angegeben.

Tabelle 1

| Bindemittel | Copolymerisat-Dispersion gemäß Beispiel | | | |
|---|---|---|---|---|
| | 1 | 2 | 3 | 4 |
| Schichtstärke (µm) | 45 | 40 | 50 | 55 |
| Fettbeständigkeit*) | 0 | 0 | 0 | 0 |
| Pendelhärte nach DIN 53 157 (s) | 160 | 170 | 175 | 165 |
| Glanz nach DIN 67 530 (%) | 91 | 90 | 88 | 92 |
| Xylol-Test**) (min) | 30 | 30 | 30 | 30 |
| Wasser-Test**) (h) | 1450 | 800 | 750 | 2200 |

Laugen-Test**) (NaOH, 10%)      kein Angriff nach 96 Stunden

\*)   0 = bester Wert,     5 = schlechtester Wert
\*\*)   Wattebauschtest, wie beschrieben

## Anwendungsbeispiel 3

Herstellung von Zweischichtmetalleffektlacken mit der Copolymerisat-Dispersion nach Beispiel 1:

Die Grundlackschicht (Base-coat) bestand aus einem Gemisch aus 10,5 g ölfreiem Polyester, 11,2 g Celluloseacetobutylrat, 2,5 g handelsüblichem nicht plastifizierten, reaktiven, partiell veretherten Melaminharz und 5 g Aluminiumpigment. Das Gemisch wurde mit einem Lösemittelgemisch aus Xylol, Essigsäurebutylester und Ethylenglykolmonobutylether (2 : 7 : 1) auf eine Auslaufzeit von 15 Sekunden im 4-mm-DIN-Becher (DIN 53 211) verdünnt. Zunächst wurde diese Grundlackschicht in einer Naßschichtdicke von 100 µm aufgebracht. Nach einer Ablüftzeit von 3 min bei Raumtemperatur erfolgte der Auftrag der Klarlack-Deckschicht, die aus 215 g der Copolymerisat-Dispersion gemäß Beispiel 1 und 11,7 g Hexamethoxymethylmelamin bestand und die mit einem Gemisch aus Wasser und Butylglycol (9 : 1) auf eine Auslaufzeit von 18 Sekunden im 4-mm-DIN-Becher verdünnt wurde. Die Zweischichtmetalleffektlackierung wurde anschließend noch für 30 min bei 150° C gehärtet. Die im »Florida-Test« geprüften Metalleffektlacke zeigten nach 12 Monaten Exposition in Florida noch eine gute Glanzhaltung und Kreidungsresistenz (zum FLORIDA-Test siehe FATIPEC-Kongreßbuch 1978, S. 83).

## Anwendungsbeispiel 4

Herstellung eines Metalleffektlackes auf der Basis der Copolymerisat-Dispersion gemäß Beispiel 4

Zur Herstellung eines Grundlackes wurde ein Gemisch aus 6,5 g eines hitzehärtbaren, fremdvernetzenden Acrylatharzes, 1,4 g eines nicht plastifizierten, reaktiven und partiell veretherten Melaminharzes und 6,8 g Aluminiumpigment homogen vermischt. Das Gemisch wurde dann mit einem Lösemittelgemisch aus Xylol und Essigsäurebutylester (1 : 1) auf eine Auslaufzeit von 15 Sekunden im 4-mm-DIN-Becher (DIN 53 211) verdünnt. Das Lackgemisch wurde auf Aluminiumbonder aufgetragen und 2 min abgelüftet. Dann wurde die Klarlack-Deckschicht, die aus einem Gemisch aus 180 g der Copolymerisat-Dispersion gemäß Beispiel 4 und 9,2 g Hexamethoxymethylmelamin bestand und mit einem Gemisch aus Wasser und Butylglykol (8 : 2) auf eine Auslaufzeit von 16 Sekunden im 4-mm-DIN-Becher verdünnt wurde, aufgetragen. Diese nach dem »Naß-in-Naß-Verfahren« hergestellte Metalleffektlackierung wurde anschließend für 20 min bei 140° C gehärtet. Die im »Florida-Test« geprüften Metalleffektlacke zeigten nach 12 Monaten eine gute Glanzhaltung und Kreidungsresistenz.

## Vergleichsbeispiel A

Nach Beispiel 1 der deutschen Offenlegungsschrift 2 709 308 wurde eine wäßrige Copolymerisat-Dispersion hergestellt, die nach dem erfindungsgemäßen Anwendungsbeispiel 1 zu einem Weißlack verarbeitet wurde. Dieser Weißlack wurde auf entfettete Stahlbleche aufgespritzt und während 30 min bei 150° C eingebrannt. Die Wasserfestigkeit dieses Lackfilms wurde nach der Wattebauschtestmethode geprüft. Man erhielt Prüfwerte von maximal 120 Stunden.

**Patentansprüche**

1. Verfahren zur Herstellung einer wäßrigen Dispersion eines Copolymerisats, welches mit einem Aminoplastharz in der Wärme vernetzbar ist und welches durch Copolymerisation von Monomeren aus der Gruppe Styrol, Acrylsäureester, Methacrylsäureester, Vinylester, monoolefinisch ungesättigte Monomere mit Hydroxylgruppen, Acrylsäure, Methacrylsäure, ungesättigte Säureamide und weitere funktionelle Comonomere in wäßriger Phase in Gegenwart eines radikalbildenden Initiators und eines Emulgators hergestellt wird, dadurch gekennzeichnet, daß ein Gemisch aus

30 bis 60 Gewichtsteilen Styrol und/oder Methylmethacrylat,

20 bis 50 Gewichtsteilen eines Acrylsäureesters oder Methacrylsäureesters, dessen Homopolymerisat eine Glastemperatur $T_G$ unterhalb +50° C aufweist, oder eines Gemisches dieser Ester,

5 bis 30 Gewichtsteilen eines Vinylesters einer verzweigten, gesättigten Monocarbonsäure, die Seitenketten mit 8 bis 12 Kohlenstoffatomen und die Carboxylgruppe an einem tertiären Kohlenstoffatom besitzt,

5 bis 15 Gewichtsteilen eines Hydroxylalkylesters einer monoolefinisch ungesättigten Monocarbonsäure,

0,5 bis 15 Gewichtsteilen einer $\alpha,\beta$-ungesättigten Monocarbonsäure und/oder ungesättigten Dicarbonsäure, und

0,1 bis 8 Gewichtsteilen eines Additionsproduktes eines Glycidylesters einer verzweigten Monocarbonsäure mit einer ungesättigten Mono- oder Dicarbonsäure

copolymerisiert wird.

2. Verfahren nach Anspruch 1, dadurch gekennzeichnet, daß zusätzlich 0,1 bis 5 Gewichtsteile eines ungesättigten Säureamids copolymerisiert werden.

3. Verwendung der nach dem Verfahren der Ansprüche 1 und 2 erhaltenen Copolymerisat-Dispersion für die Herstellung von durch Wärme vernetzbaren Überzüge.

**Claims**

1. A process for the preparation of an aqueous dispersion of a copolymer which can be crosslinked with an aminoplast resin by the action of heat and which is prepared by copolymerization of monomers from the group comprising styrene, esters of acrylic acid, esters of methacrylic acid, vinyl esters, monoolefinic unsaturated monomers having hydroxyl groups, acrylic acid, methacrylic acid, unsaturated acid amides and other functional comonomers, in an aqueous phase in the presence of a radical-forming initiator and an emulsifier, which comprises copolymerizing mixture of

30 to 60 parts by weight of styrene and/or methyl methacrylate,

20 to 50 parts by weight of an ester of acrylic acid or of methacrylic acid, the homopolymer of which has a glass temperature $T_G$ below +50° C, or a mixture of these esters,

5 to 30 parts by weight of a vinyl ester of a branched saturated monocarboxylic acid, which has side chains having 8 to 12 carbon atoms and in which the carboxyl group is on a tertiary carbon atom,

5 to 15 parts by weight of a hydroxylalkyl ester of a monoolefinic unsaturated monocarboxylic acid,

0.5 to 15 parts by weight of an $\alpha,\beta$-unsaturated monocarboxylic acid and/or unsaturated dicarboxylic acid, and

0.1 to 8 parts by weight of an addition product of a glycidyl ester of a branched monocarboxylic acid with an unsaturated monocarboxylic or dicarboxylic acid.

2. The process as claimed in claim 1, wherein, in addition, 0.1 to 5 parts by weight of an unsaturated acid amide are copolymerized.

3. The use of the copolymer dispersion obtained by the process of claims 1 and 2 for the preparation of coatings which can be crosslinked by the action of heat.

**Revendications**

1. Procédé pour la préparation d'une dispersion aqueuse d'un copolymère, réticulable à chaud avec une résine aminoplaste, et qui est préparé par copolymérisation de monomères appartenant au

**0 071 070**

groupe styrène, esters acryliques, esters méthacryliques, esters vinyliques, monomères insaturés monooléfiniques avec groupes hydroxyles, acide acrylique, acide méthacrylique, amides d'acides insaturés et autres comonomères fonctionnels, en phase aqueuse en présence d'un initiateur radicalaire et d'un émulsionnant, caractérisé en ce qu'on copolymérise un mélange constitué de

30 à 60   parties en poids de styrène et/ou de méthacrylate de méthyle,

20 à 50   parties en poids d'un acrylate ou d'un méthacrylate, dont l'homopolymère présente une température de transition vitreuse $T_G$ inférieure à $+50°$C, ou un mélange de ces esters,

5 à 30   parties en poids d'un ester vinylique d'un acide monocarboxylique saturé ramifié, qui possède des chaînes latérales à 8 à 12 atomes de carbone et le groupe carboxyle sur un atome de carbone tertiaire,

5 à 15   parties en poids d'un ester hydroxyalkylique d'un acide monocarboxylique insaturé monooléfinique,

0,5 à 15   parties en poids d'un acide monocarboxylique $\alpha,\beta$-insaturé et/ou d'un acide dicarboxylique insaturé, et

0,1 à 8   parties en poids d'un produit d'addition d'un ester glycidylique d'un acide monocarboxylique ramifié avec un acide mono- ou dicarboxylique insaturé.

2. Procédé selon la revendication 1, caractérisé en ce qu'on copolymérise en outre 0,1 à 5 parties en poids d'un amide d'acide insaturé.

3. Utilisation de la dispersion de copolymères obtenue par le procédé selon les revendications 1 ou 2, pour la préparation de revêtements réticulables à la chaleur.

11